# EUROPÄISCHE PATENTSCHRIFT

(11) **EP 0 586 901 B1**
(45) Veröffentlichungstag und Bekanntmachung des Hinweises auf die Patenterteilung: **05.02.1997**
(21) Anmeldenummer: 93112717.9
(22) Anmeldetag: 09.08.1993
(51) Int. Cl.: G01N 25/72

(54) **Messanordnung zur berührungslosen Bestimmung der Dicke und/oder thermischen Eigenschaften von Folien und dünnen Oberflächenschichten**
Contactless measurement device for thickness and/or thermal properties of foils and thin surface layers
Dispositif de mesure sans contact de l'epaisseur et/ou des propriétés thermiques de feuilles ou de couche minces superficielles

(30) Priorität: 08.09.1992 DE 4230035
(43) Veröffentlichungstag der Anmeldung: 16.03.1994
(73) Patentinhaber: SIEMENS AKTIENGESELLSCHAFT, 80333 München (DE)
(72) Erfinder: Baumann, Joachim, Dr., D-81925 München (DE); Beyfuss, Martin, Dipl.-Phys., D-81379 München (DE)

(56) Entgegenhaltungen:
- EP-A- 0 105 078
- DE-A- 3 737 426
- DE-A- 3 939 877

## Beschreibung

Das Prinzip der Dickenbestimmung von Folien und dünnen Oberflächenbeschichtungen mit Hilfe der instationären Wärmeleitung ist seit langem bekannt. Es beruht darauf, bei einer zeitlich veränderlichen Aufheizung einer Probenoberfläche den daraus resultierenden zeitlichen Verlauf der Oberflächentemperatur auszuwerten. Es läßt sich zeigen, daß der zeitliche Verlauf der Temperatur nach einer zeitlich definierten Aufheizung empfindlich von der Dicke sowie von den thermischen Kenngrößen einer Schicht oder Folie abhängt. Im Prinzip kann die Aufheizung dabei einen zeitlichen Verlauf haben, der zwischen einem Einzelimpuls und einer periodischen sinusförmigen Form liegt. Ist die Anregung periodisch, so stellt sich die Temperaturoszillation hinsichtlich Amplitude und Phase in charakteristischer Weise ein.

Eine Meßanordnung der eingangs genannten Art ist beispielsweise aus Z. Werkstofftech. 15, 140-148 (1984) bekannt. Bei der dort dargestellten Versuchsanordnung wird die von einem Laser erzeugte und in einem nachgeordneten Modulator in der Intensität periodisch veränderte Heizstrahlung auf das Meßobjekt gerichtet. Die absorbierte Heizstrahlung erzeugt dann sog. Wärmewellen, die von Grenzflächen im Probeninneren reflektiert werden. Diese reflektierten Wärmewellen werden dann an der Oberfläche des Meßobjekts über die resultierende Modulation der thermischen Emission nachgewiesen. Hierzu wird ein Infrarot-Detektor verwendet, dessen Ausgangssignal in einem phasenempfindlichen Lock-In-Verstärker mit dem Referenzsignal des Modulators verglichen wird. Der derart ermittelte Phasenunterschied ergibt dann Aufschluß über die jeweilige Schichtdicke, wobei durch einen Schiebeschlitten auch eine lokale Ortsauflösung ermöglicht wird.

Aus der EP-A-0 105 078 oder der DE-A-39 39 877 sind Meßanordnungen zur berührungslosen Bestimmung der Dicke und/oder thermischen Eigenschaften von Folien und dünnen Oberflächenbeschichtungen bekannt, bei welchen die Heizeinrichtung, welche die auf das Meßobjekt gerichtete Heizstrahlung erzeugt, und der Strahlungsempfänger, der die vom angeregten Meßobjekt emittierte thermische Strahlung empfängt, jeweils über flexible Lichtleiter mit einem beweglich angeordneten Meßkopf verbunden sind. In dem Meßkopf befindet sich ein in den Strahlengang von Heizstrahlung und thermischer Strahlung eingefügter Strahlteiler, der entgegengesetzte Strahlungsrichtungen der auf das Meßobjekt einfallenden Heizstrahlung und der vom Meßobjekt emittierten thermischen Strahlung ermöglicht. In der DE-A-39 39 877 ist über diesen Strahlteiler ausgesagt, daß er die Heizstrahlung zumindest weitgehend reflektieren und die thermische Strahlung zumindest weitgehend transmittieren soll und vorzugsweise durch eine dielektrische Reflexionsbeschichtung auf einem Substrat aus Saphir oder Calciumfluorid gebildet ist. Dabei soll die dielektrische Reflexionsbeschichtung eine nahezu vollständige Reflexion der Heizstrahlung bewirken, wobei die verbleibende transmittierte Heizstrahlung von Saphir oder Calciumfluorid nicht absorbiert wird und damit keine störenden Erwärmungen verursacht.

Bei der Messung von thermischer Strahlung im Infrarot-Bereich, die durch Bestrahlung von Meßobjekten mit einer beispielsweise im sichtbaren Spektralbereich liegenden Heizstrahlung angeregt wird, muß die anregende Heizstrahlung aufgrund neuerer Erkenntnisse extrem stark unterdrückt werden, damit die Meßanordnung erfolgreich und mit hoher Genauigkeit beispielsweise für die Schichtdickenbestimmung eingesetzt werden kann. Diese Erkenntnisse beruhen auf der folgenden Abschätzung:
Beleuchtet man ein Meßobjekt mit etwa 1 W modulierter Heizstrahlung auf eine Fläche von 1 cm², so entstehen typischerweise Schwankungen der vom angeregten Meßobjekt emittierten thermischen Strahlung von nur einigen µW. Als Zahlenwert soll hier 10 µW und somit ein für die folgenden Betrachtungen ungünstiger Fall angenommen werden. Gelangt nur ein geringer Bruchteil der vom Meßobjekt in Form von Streulicht zurückgeworfenen Heizstrahlung, z. B. nur 1 %, also 10 mW auf den Strahlungsempfänger für die thermische Strahlung, so würde das Verhältnis von erwünschter Strahlung zu unerwünschter Strahlung bestenfalls 1 : 1000 sein, da die unerwünschte Strahlung zeitlich kohärent zum Nutzsignal ist und sich somit in Lock-In-Technik nicht unterdrücken läßt. Um präzise zu messen, benötigt man aber ein Verhältnis von 100 : 1. Die geforderte Unterdrückung der vom Meßobjekt zurückgeworfenen anregenden Heizstrahlung beträgt demnach etwa 10⁵, wobei in der Praxis jedoch ein Faktor von 10⁴ genügt, da der Strahlungsempfänger typischerweise zehnmal unempfindlicher für die anregende Heizstrahlung im sichtbaren Spektralbereich als für die vom Meßobjekt emittierte thermische Strahlung ist.

Die vorstehend aufgeführten Anforderungen sind nicht alleine durch spezielle dielektrische Beschichtungen eines Strahlteilers zu erreichen. Nach Angaben eines Herstellers derartiger Beschichtungen ist eine breitbandige Reflexion im Spektralbereich der anregenden Heizstrahlung von höchstens etwa 98 % bei gleichzeitiger hoher Transmission der thermischen Strahlung im Infrarot-Bereich technisch erreichbar. Erforderlich wären aber 99,999 % Reflexion für die anregende Heizstrahlung.

Der im Anspruch 1 angegebenen Erfindung liegt das Problem zugrunde, bei der berührungslosen Bestimmung der Dicke und/oder thermischen Eigenschaften von Folien und dünnen Oberflächenbeschichtungen mittels instationärer Wärmeleitung eine extrem starke Unterdrückung der vom Meßobjekt zurückgeworfenen anregenden Heizstrahlung zu gewährleisten.

Bei der erfindungsgemäßen Meßanordnung ist der Strahlteiler so angeordnet, daß der vom Meßobjekt zurückgeworfene Anteil der anregenden Heizstrahlung zunächst auf die dielektrische Beschichtung trifft. Die dann noch transmittierte Intensität muß im Substrat durch Absorption mindestens um den Faktor von 200 auf eine Restintensität abgeschwächt werden. Bei dem eingangs erläuterten Beispiel ware die transmittierte Intensität von 0,2 mw durch Absorption im Substrat auf eine Restintensität von 1 µW abgeschwächt worden. Dies hätte unter Berücksichtigung der um den Faktor 10 reduzierten Empfindlichkeit des Strahlungsempfängers dieselbe Wirkung wie 0,1 µW der thermischen Strahlung im Infrarot-Bereich. Die optische Dicke des Substrats muß demnach größer als etwa 5.3 sein, was einer Abschwächung auf 1:200 entspricht. Diese Forderung wird bei der Wahl von Germanium, Cadmiumtellurid oder Silizium als Substratmaterial erfüllt. Bei diesen Materialien beträgt bei einer geometrischen Dicke des Substrats im Millimeterbereich die optische Dicke im Bereich der anregenden Heizstrahlung bereits wesentlich mehr als der geforderte Grenzwert von 5.3.

Bei Substraten aus Germanium, Cadmiumtellurid oder Silizium, die im Bereich der anregenden Heizstrahlung stark absorbieren, ist jedoch das Sekundärwärmesignal zu diskutieren, das aus dieser Absorbtion resultiert. Dieses Infrarotsignal ist unerwünscht, da es in Amplitude und Phase nicht dem Probensignal entspricht. Bei der erfindungsgemäßen Meßanordnung liegt die dielektrische Beschichtung jedoch auf der dem Meßobjekt zugewandten Seite des Strahlteilers, so daß nur ein äußerst geringer Anteil der vom Meßobjekt zurückgeworfenen Heizstrahlung im Substrat absorbiert und das resultierende Sekundärwärmesignal gegenüber dem Nutz-Signal vernachlässigbar ist. Im genannten Zahlenbeispiel wird 20 mw der vom Meßobjekt zurückgeworfenen Heizstrahlung im Substrat absorbiert, was zu 0,02 µW Sekundärwärmesignal führt, das also mindestens um den Faktor 500 unter dem Nutz-Signal im Infraroten liegt.

Ein Ausführungsbeispiel der Erfindung ist in der Zeichnung dargestellt und wird im folgenden näher beschrieben.

Es zeigen:
Figur 1 eine Meßanordnung zur berührungslosen Bestimmung der Dicke von Folien und Oberflächenbeschichtungen und
Figur 2 die Strahlführung von Heizstrahlung und thermischer Strahlung im Bereich des Strahlteilers der Meßanordnung gemäß Figur 1.

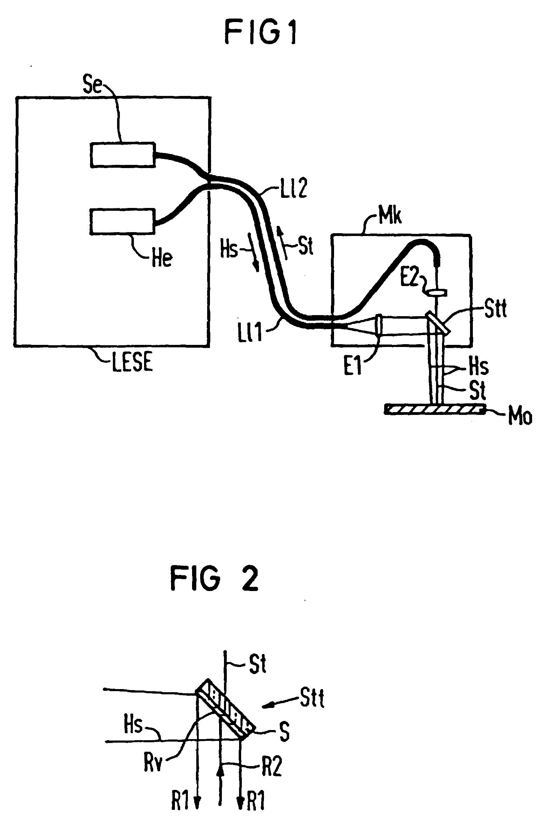

Mit der in Figur 1 in stark vereinfachter schematischer Darstellung aufgezeigten Meßanordnung soll an einem mit Mo bezeichneten Meßobjekt beispielsweise die Dicke einer auf Stahlblech aufgebrachten Lackschicht gemessen werden. Hierzu wird zunächst die in der Heizeinrichtung He einer stationären Licht/Elektronik/Strahlungsempfänger-Einheit LESE erzeugte intensitätsmodulierte Heizstrahlung Hs auf die Oberfläche es Meßobjekts Mo gerichtet. Für die Übertragung der Heizstrahlung Hs sind ein erster flexibler Lichtleiter Ll1, ein erstes abbildendes Element E1 und ein Strahlteiler Stt vorgesehen. Die in der Lackschicht des Meßobjekts Mo absorbierte Heizstrahlung Hs bewirkt an der Oberfläche eine Temperaturoszillation, die über die entsprechend emittierte thermische Strahlung St von einem ebenfalls in der stationären Licht/Elektronik/Strahlungsempfänger-Einheit LESE untergebrachten Strahlungsempfänger Se erfaßt wird. Die emittierte thermische Strahlung St gelangt über den Strahlteiler Stt zu einem zweiten abbildenden Element E2, welches die thermische Strahlung St auf einen zweiten flexiblen Lichtleiter Ll2 abbildet, der die thermische Strahlung St dann zum Strahlungsempfänger Se weiterleitet. Innerhalb des mit Mk bezeichnetenMeßkopfes befinden sich also nur die beiden Enden der Lichtleiter Lll und Ll2, die beiden abbildenden Elemente E1 und E2 und der Strahlteiler Stt.

Die Signalverarbeitung erfolgt in der Licht/ Elektronik/Strahlungsempfänger-Einheit LESE beispielsweise so, wie es in der Z. Werkstofftech. 15, 140-148 (1984) oder der DE-A-36 31 652 beschrieben ist.

Aus Figur 2 ist die Strahlführung von Heizstrahlung Hs und thermischer Strahlung St im Bereich des Strahlteilers Stt ersichtlich. Dieser Strahlteiler Stt besteht aus einem Substrat S, das auf seiner dem Meßobjekt Mo (vgl. Figur 1) zugewandten Seite eine dielektrische Reflexionsbeschichtung Rv trägt. Diese dielektrische Reflexionsbeschichtung Rv lenkt die im dargestellten Beispiel unter einem Winkel von 45° einfallende Heizstrahlung Hs in der im wesentlichen senkrechten Richtung R1 auf die Obefläche des Meßobjekts Mo. Die vom Meßobjekt Mo emittierte thermische Strahlung St wird dann innerhalb des Strahlkegels des relativ schwach fokussierten Heizstrahles Hs in entgegengesetzter Richtung R2 zum Strahlteiler Stt geführt. Dieser transmittiert die emittierte thermische Strahlung St, so daß sie durch das bereits erwähnte zweite abbildende Element E2 auf den zweiten flexiblen Lichtleiter Ll2 abgebildet werden kann. Durch die entgegengesetzten Richtungen R1 und R2 von Heizstrahlung Hs und thermischer Strahlung St können Translationen und Kippbewegungen des Meßobjekts Mo toleriert werden, sofern bei letzteren der Mittelpunkt des Heizstrahlungsfleckes auf der Oberfläche des Meßobjekts Mo nicht verschoben wird.

Die anregende Heizstrahlung Hs kann im Wellenlängenbereich zwischen 0,25 µm und 2,5 µm liegen, während die vom angeregten Meßobjekt Mo emittierte thermische Strahlung St im Wellenlängenbereich zwischen 3 µm und 15µm liegen kann. An die dielektrische Reflexionsbeschichtung Rv und das Substrat S des Strahlteilers Stt werden dabei folgende Anforderungen gestellt:
- Die dielektrische Reflexionsbeschichtung Rv soll die anregende Heizstrahlung Hs möglichst weitgehend reflektieren.
- Die dielektrische Reflexionsbeschichtung Rv soll die emittierte thermische Strahlung St zumindest weitgehend transmittieren.
- Das Substrat S soll die anregende Heizstrahlung Hs zumindest weitgehend absorbieren.
- Das Substrat S soll die emittierte thermische Strahlung St zumindest weitgehend transmittieren.

Die vorstehenden Anforderungen werden im Hinblick auf die dielektrische Reflexionsbeschichtung Rv durch die üblichen, vorzugsweise mehrschichtig aufgebauten Beschichtungen erfüllt. Geeignete Beschichtungen gehen beispielsweise aus R. D. Hudson: "Infrared Systems Ingeneering", Verlag John Wiley & Sons, New York, 1969, S. 219, Table 5.4 hervor.

Die an das Substrat S gestellten Anforderungen werden durch Germanium, Cadmiumtellurid und Silizium als Substratmaterialien erfüllt, wobei Germanium und Cadmiumtellurid eine besonders breitbandige Unterdrückung der Heizstrahlung Hs ermöglichen. Von diesen beiden Substratmaterialien wird wiederum Germanium bevorzugt, da Cadmiumtellurid eine hohe Sprödigkeit aufweist.

Bei der Anordnung eines erfindungsgemäß ausgestalteten Strahlteilers Stt im Meßkopf Mk wird der von der Oberfläche des Meßobjekts Mo zurückgeworfene Anteil der Heizstrahlung Hs zu etwa 98 % an der dielektrischen Reflexionsbeschichtung Rv reflektiert. Die dann noch transmittierte Intensität wird im Substrat S um einen Faktor von mehr als 200 auf eine äußerst geringe Restintensität abgeschwächt, da die optische Dicke der genannten Substratmaterialien im Wellenlängenbereich der Heizstrahlung Hs bei einer geometrischen Dicke im Millimeterbereich größer als 5.3 ist. Durch diese extrem starke Unterdrückung der anregenden Heizstrahlung Hs können Messungen, wie z. B. Schichtdickenmessungen, mit sehr hoher Genauigkeit durchgeführt werden.

## Patentansprüche

1. Meßanordnung zur berührungslosen Bestimmung der Dicke und/oder thermischen Eigenschaften von Folien und dünnen Oberflächenbeschichtungen mittels instationärer Wärmeleitung, mit
- einer Heizeinrichtung ((He) zur Erzeugung einer auf das Meßobjekt (Mo) gerichteten zeitlich intensitätsmodulierten Heizstrahlung (Hs),
- einem Strahlungsempfänger (Se) für die vom angeregten Meßobjekt (Mo) emittierte thermische Strahlung (St),
- einem in den Strahlengang von Heizstrahlung (Hs) und thermischer Strahlung (St) eingefügten Strahlteiler (Stt), welcher die Heizstrahlung (Hs) zumindest weitgehend reflektiert und die thermische Strahlung (St) zumindest weitgehend transmittiert,
- wobei der Strahlteiler (Stt) durch ein Substrat (S) aus Germanium, Cadmiumtellurid oder Silizium gebildet ist, das auf seiner dem Meßobjekt (Mo) zugewandten Seite eine dielektrische Reflexionsbeschichtung (Rv) trägt.

## Claims

1. Measuring arrangement for contactless determination of the thickness and/or thermal properties of films and thin surface coatings by means of nonsteady-state thermal conduction, with
- a heating device (He) for generating temporally intensity-modulated heat radiation (Hs) directed at the measurement object (Mo),
- a radiation receiver (Se) for the thermal radiation (St) emitted by the stimulated measurement object (Mo),
- a beam splitter (St), interposed on the optical path of the heat radiation (Hs) and the thermal radiation (St), which at least substantially reflects the heat radiation (Hs) and at least substantially transmits the thermal radiation (St),
- the beam splitter (Stt) being formed by a germanium, cadmium telluride or silicon substrate (S) which has a dielectric reflection coating (Rv) on its side facing the measurement object (Mo).

## Revendications

1. Dispositif de mesure sans contact de l'épaisseur et/ou des propriétés thermiques de feuilles et de couches superficielles minces par conduction thermique non-stationnaire, comprenant
- un dispositif de chauffage (He) destiné à générer un rayonnement de chauffage (Hs) à intensité variable dans le temps, qui est dirigé sur l'objet à mesurer (Mo),
- un récepteur de rayonnement (Se) pour le rayonnement thermique (St) émis par l'objet à mesurer (Mo) excité,
- un séparateur de faisceaux (Stt) placé dans la trajectoire du rayonnement de chauffage (Hs) et du rayonnement thermique (St), qui réfléchit le rayonnement de chauffage (Hs) au moins en grande partie et qui transmet le rayonnement thermique (St) au moins en grande partie,
- le séparateur de faisceaux (Stt) étant composé d'un substrat (S) en germanium, tellurure de cadmium ou silicium, dont le côté orienté vers l'objet à mesurer (Mo) est pourvu d'une couche réfléchissante diélectrique (Rv).
